# EUROPÄISCHE PATENTANMELDUNG

(11) **EP 1 060 830 A1**
(43) Veröffentlichungstag der Anmeldung: **20.12.2000**
(21) Anmeldenummer: 00111869.4
(22) Anmeldetag: 09.06.2000
(51) Int. Cl.: B23Q 17/09

(54) **Vorrichtung und Verfahren zur thermographischen Untersuchung von Funktionsflächen an Umformwerkzeugen**

(30) Priorität: 17.06.1999 DE 19927760
(71) Anmelder: DaimlerChrysler AG, 70567 Stuttgart (DE)
(72) Erfinder: Lahres, Michael, Dr., 89073 Ulm (DE); Engering, Gerrit, 89075 Ulm (DE)

(57) **Zusammenfassung**

Die thermographische Untersuchung von Funktionsflächen an Umformwerkzeugen während des Umformprozesses ist wichtig für die Auswahl eines optimalen Werkzeug-Werkstoffes oder einer optimalen Beschichtung für einen bestimmten Umformprozeß und für einen bestimmten Werkstückstoff und auch für die Optimierung von Prozeßparametern des Umformprozesses.

Die Aufgabe der vorliegenden Erfindung besteht daher darin, eine Vorrichtung und ein Verfahren zu entwickeln, welche die thermographische Untersuchung von Funktionsflächen an Umformwerkzeugen während des Umformprozesses schnell und in einfacher Weise ermöglichen.

Die Aufgabe wird gelöst, durch ein Verfahren und eine Vorrichtung, bei denen die benötigte Temperaturverteilung der Funktionsflächen während des Umformprozesses vom Ort ihrer Entstehung aus durch einen in das Werkzeug (1) eingebrachten Kanal (11) in Richtung zu einer Temperaturmeßeinrichtung (3) mittels Wärmestrahlung und gegebenenfalls Wärmeleitung weitergeführt wird.

## Beschreibung

Die Erfindung betrifft eine Vorrichtung und ein Verfahren zur schnellen und einfachen thermographischen Untersuchung von Funktionsflächen an Umformwerkzeugen gemäß Oberbegriff der Patentansprüche 1 und 11. Eine Vorrichtung zur Untersuchung der thermischen Beanspruchung von Funktionsflächen an Umformwerkzeugen ist bereits aus [1] bekannt.

Die Optimierung von Umformprozessen und der zugehörigen Werkzeuge ist Gegenstand intensiver Forschungs- und Entwicklungsbemühungen. Besonderes Interesse findet hier die Temperaturmessung im Arbeitsbereich während des Arbeitsprozesses. Sie erlaubt die in situ Bestimmung der Belastung und des Verschleißzustandes des Werkzeuges. Immer neue Anforderungen an die Werkzeuge bedingen höhere Belastungen und erfordern leistungsfähigere neue Materialien für diese Werkzeuge. Üblicherweise werden diese neuen Materialien in Form von Beschichtungen auf die Werkzeuge aufgebracht.

In [1] wird zur Bestimmung der Temperatur der Verschleißfläche eines umformenden oder zerspanenden Werkzeuges vorgeschlagen, einen (oder mehrere) Dünnfilmsensoren in eine Funktions- oder Verschleißschutzschicht des Werkzeuges zu integrieren. Dies erfordert eine hohen Aufwand und hohe Kosten. Außerdem ermöglichen Dünnfilmsensoren nur eine punktuelle Temperaturmessung. Die Bestimmung der Temperaturverteilung wäre hier nur mit einer Vielzahl von Sensoren möglich und würde noch mehr Aufwand und Kosten erfordern. Weiterhin ist mit der Integration eines Dünnfilmsensors in ein Werkzeug keine hohe Meßdynamik zu erzielen.

Die Aufgabe der vorliegenden Erfindung besteht daher darin, eine Vorrichtung zur schnellen und einfachen thermographischen Untersuchung von Funktionsflächen an Umformwerkzeugen in situ anzugeben, welche die Bestimmung der Temperaturverteilung ohne Behinderung des Arbeitsvorgangs unter der Zielsetzung der Optimierung des Verschleiß- und des Umformverhaltens der eingesetzten Werkzeuge ermöglicht ohne Aufwand und Kosten zu erhöhen sowie ein Verfahren mit den gleichen Vorteilen zu entwickeln.

Die Erfindung ist in Bezug auf die zu schaffende Vorrichtung durch die Merkmale des Patentanspruchs 1 wiedergegeben. Die weiteren Ansprüche enthalten vorteilhafte Ausgestaltungen und Weiterbildungen der erfindungsgemäßen Vorrichtung (Patentansprüche 2 bis 9) sowie das zu schaffende Verfahren (Patentanspruch 11). Vorteilhafte Weiterbildungen des erfindungsgemäßen Verfahrens enthalten die Patentansprüche 12 bis 15.

Die Aufgabe wird bezüglich der zu schaffenden Vorrichtung erfindungsgemäß dadurch gelöst, daß die Vorrichtung zur thermographischen Untersuchung von Funktionsflächen an Umformwerkzeugen derart gestaltet ist,
daß sie eine Temperaturmeßeinrichtung enthält,
daß das Umformwerkzeug im Bereich der Funktionsfläche
   mindestens einen Kanal aufweist,
   die jeder eine werkstückseitige Öffnung aufweisen,
      und
   in denen eine von der zu untersuchenden Funktionsfläche
      ausgehende Wärmestrahlung weiterleitbar ist,
      wobei die durch einen Kanal weitergeleitete
         Wärmestrahlung zumindest mittelbar von der
         Temperaturmeßeinrichtung erfaßbar ist,
daß die werkstückseitige Öffnung jedes Kanals mit einem Fenster belegbar ist, welches für die Wärmestrahlung durchlässig ist.

Das Grundprinzip der erfindungsgemäßen Vorrichtung besteht darin, daß die thermographischen Untersuchung der Funktionsfläche von der Werkzeuginnenseite her durch den oder die eingebrachten Kanäle erfolgt. Dadurch wird erstmals die behinderungs- und verzögerungsfreie Messung der absoluten Temperaturen und zweidimensionalen Temperaturverteilungen der Werkstückoberfläche direkt im Kontaktbereich Werkzeug-Werkstück in situ ermöglicht. Dadurch kann der Umformprozeß an sich untersucht und optimiert werden hinsichtlich der Bearbeitungsparameter, der Werkzeuggeometrie und des Tribosystems (Werkzeugwerkstoff, Werkzeugbeschichtung, Schmierstoff, Oberflächentopographie). Die Messung kann nicht nur im Versuchsbetrieb durchgeführt werden, sondern auch in der Serienfertigung zur dynamischen Prozeßregelung eingesetzt werden.

Der Aufwand und die Kosten der erfindungsgemäßen Vorrichtung sind gegenüber denen für die Anbringung eines Meßfeldes aus einer Vielzahl von Dünnschichtsensoren gering. Außerdem würde ein solches Meßfeld nur eine näherungsweise Bestimmung der räumlichen Temperaturverteilung erlauben, da die Dünnschichtsensoren nur punktuell messen.

Je nach Größe der werkstückseitigen Öffnung des Kanals ist diese mit einem Fenster belegt oder nicht.

In einer vorteilhaften Ausführungsform der erfindungsgemäßen Vorrichtung ist die werkstückseitige Öffnung jedes Kanals mit einem Fenster belegt und auf dem Fenster ist eine Beschichtung aufgebracht.

Hierdurch wird die Bestimmung des Einsatzverhaltens und insbesondere der Einsatzgrenzen von beliebigen Werkzeugbeschichtungen unter realen Anwendungsbedingungen ermöglicht. Handelt es ich um IR-durchlässige Beschichtungen, beispielsweise Diamant oder ähnliche Beschichtungen - so wird direkt der Kontaktbereich Werkzeug-Werkstück in situ untersucht. Handelt es ich um IR-undurchlässige Beschichtungen, so wird die Temperaturverteilung vom Kontaktbereich aus zuerst mittels Wärmeleitung durch die Beschichtung zu deren Unterseite geführt und erst danach mittels Wärmestrahlung in Richtung zu der Temperaturmeßeinrichtung weitergeführt. Werkzeugbeschichtungen sind üblicherweise nur wenige Mikrometer dick, deshalb verfälscht die Wärmeleitung durch sie hindurch die, Messung der Temperaturverteilung nur in einer vernachlässigbaren Größenordnung.

In einer weiteren vorteilhaften Ausführungsform der erfindungsgemäßen Vorrichtung ist über dem Fenster oder anstatt des Fensters eine Abdeckung befestigt, welche aus einem üblicherweise bei Umformprozessen verwendeten Werkzeugwerkstoff, beispielsweise einem chromhaltigen Werkzeugstahl, besteht.

Der Vorteil dieser Ausführungsform besteht in der einfachen, schnellen und kostengünstigen Austauschbarkeit der Abdeckung und damit des Werkzeugmaterials und der Werkzeugoberflächen.

In einer weiteren vorteilhaften Ausführungsform der erfindungsgemäßen Vorrichtung ist auf der Abdeckung eine Beschichtung aufgebracht.

Der Vorteil dieser Ausführungsform besteht darin, daß die Abdeckung leicht auswechselbar ist und unabhängig vom Rest des Werkzeuges oder der Meßeinrichtung beschichtet werden kann. Dies führt zu einer Zeit- und Kostenersparnis und ermöglicht unmittelbar vergleichende Messungen mit einer Grundvorrichtung. Mittels vergleichender Messungen kann in Optimierungsschleifen iterativ eine optimal bedarfsangepaßte Beschichtung für jeden Anwendungsfall der Umformtechnik entwickelt werden.

Darüber hinaus läßt sich eine Abdeckung - aus einem üblicherweise bei Umformprozessen verwendeten Werkzeugstahl - mit für die Umformtechnik interessanten Materialien wesentlich besser und haftfester beschichten als die meisten anderen Oberflächen, die den Belastungen während eines Umformprozesses standhalten, beispielsweise eine Diamantoberfläche, auf der wegen des kovalenten Bindungscharakters keine ausreichende Haftung erzielt wird. Eine ausreichende Haftung ist jedoch Voraussetzung für Temperaturmessungen über längere Zeiträume während des Umformprozesses, ohne daß es zum Abplatzen der Beschichtung kommt. Dies ermöglicht Standzeitversuche der Umformvorrichtung mit paralleler Temperaturmessung.

Das unter der Abdeckung befindliche Fenster stützt diese flächig ab und verhindert so eine Deformation oder das Zerbrechen einer dünneren Abdeckung aufgrund der Beanspruchung während des Umformprozesses. Bei der Verwendung von Abdeckungen mit ausreichender mechanischer Belastbarkeit kann hingegen auf das Fenster verzichtet werden.

Generell ist eine Kalibrierung der Vorrichtung, insbesondere der Temperaturmeßeinrichtung auf die Emissionseigenschaften des Werkstoffes bzw. der Beschichtung erforderlich. Der Kalibrationsaufwand für unterschiedliche Werkstoffe oder Werkzeugbeschichtungen kann jedoch auf eine einzige Kalibration reduziert werden, in dem jeweils eine Abdeckung aus einem einzigen üblicherweise bei Umformprozessen verwendeten Werkzeugwerkstoff über oder anstatt dem Fenster auf den Kanal aufgesetzt wird.

In einer vorteilhaften Ausführungsform dieser Vorrichtung sind das Material und die Dicke der Abdeckung derart gewählt, daß das Abbild der Temperaturverteilung der Funktionsfläche (bzw. der Unterseite der Beschichtung), welches mittels Wärmeleitung durch die Abdeckung hindurchgeführt wird, in Querrichtung zu dieser beabsichtigten Abbildungsrichtung nicht über einen definierten Grenzwert hinaus verfälscht wird.

Da die Wärmeleitung durch die Abdeckung nicht nur in der gewünschten Richtung sondern auch quer dazu stattfindet, wird die Temperaturverteilung, die an der Unterseite der Abdeckung vorliegt, gegenüber der Temperaturverteilung, die im Kontaktbereich Werkzeug(-abdeckung)-Werkstück oder an der Unterseite der (Abdeckungs-) Beschichtung vorliegt, leicht verschmiert oder geglättet sein.

Um den Einfluß einer bestimmten Abdeckung ermitteln zu können, muß die Temperaturverteilung mit und ohne Abdeckung gemessen werden. Dies kann mit IR-durchlässigen Beschichtungen leicht durchgeführt werden. Durch Untersuchung von Abdeckungen verschiedener Materialien und Dicke können beide Werte so iterativ optimiert werden hinsichtlich einer minimalen Abweichung der gemessenen und der tatsächlichen Temperaturverteilung in der Beschichtung. Eine derart optimierte Abdeckung kann dann für die thermographische Untersuchung beliebiger Beschichtungen eingesetzt werden.

Versuchsergebnisse haben gezeigt, daß die Abweichung der gemessenen und der tatsächlichen Temperaturverteilung in der Beschichtung vernachlässigbar ist, wenn die Abdeckung aus dem Werkzeugstahl 160 CrMoV 12 (Deutsche Stoffnummer: 1.2379) besteht und eine Dicke von nicht mehr als 300 µm aufweist.

In einer weiteren vorteilhaften Ausführungsform dieser Vorrichtung ist die Abdeckung durch Aufkleben befestigt. Diese Befestigungsmethode erlaubt eine flächige und damit gleichmäßigere Befestigung als beispielsweise mittels Schrauben oder eine Klemmverbindung. Während des Umformprozesses ist die Abdeckung Belastungen unterzogen, die bei ungleichmäßiger Befestigung eher zu inneren Spannungen führen können und dadurch die mittels Wärmeleitung transportierte Abbildung der Temperaturverteilung der Funktionsfläche bzw. der Beschichtung verfälschen können. Darüber hinaus können Schraubenköpfe oder Klemmbefestigungen aufgrund der geringen Dicke der Abdeckung kaum in ihr versenkt werden, wodurch die Möglichkeiten für ihre Anordnung stark eingeschränkt werden, da sie den Umformprozeß nicht beeinträchtigen sollen.

Geeignete Kleber sind beispielsweise handelsübliche Zwei-Komponenten-Kleber, die für die Wärmestrahlung durchlässig sind und die kurzfristige Temperaturspitzen von bis zu 500 Grad Celsius und Dauertemperaturen von bis zu 200 Grad Celsius ohne kritische Beeinträchtigung der Haftung überstehen.

In einer weiteren vorteilhaften Ausführungsform dieser Vorrichtung ist das Fenster aus einem Material aufgebaut, welches eine ähnliche Wärmeleitfähigkeit besitzt wie die Abdeckung. Dadurch wird eine Wärmestau an der Unterseite der Abdeckung vermieden, der die thermographische Untersuchung verfälschen würde.

Besonders geeignet ist ein Diamant- oder Germanium-Fenster. Deren Vorteil besteht darin, daß diese Materialien einerseits eine gute Durchlässigkeit für Wärmestrahlung besitzen und so das Abbild der Temperaturverteilung gut weiterleiten. Andererseits besitzen sie eine gute Wärmeleitfähigkeit um die Wärme von der Unterseite der Abdeckung abzuleiten und so einen Wärmestau zu vermeiden.

In einer weiteren vorteilhaften Ausführungsform dieser Vorrichtung ist in dem Kanal mindestens ein IR-Spiegel angeordnet, zur Weiterleitung der werkstückseitig in den Kanal eintretenden Wärmestrahlung in Richtung auf die Temperaturmeßeinrichtung. Viele Umformwerkzeuge ermöglichen aufgrund ihrer Bauform und ihrer Anordnung während des Umformprozesses keine gerade Führung des Kanals in ihrem Inneren. In solchen Fällen ermöglichen ein oder mehrere IR-Spiegel die Weiterleitung des Abbildes der Temperaturverteilung hin zur Temperaturmeßeinrichtung.

In einer alternativen vorteilhaften Ausführungsform dieser Vorrichtung ist in dem Kanal ein Lichtleiter angeordnet, zur Weiterleitung der werkstückseitig in den Kanal eintretenden Wärmestrahlung in Richtung auf die Temperaturmeßeinrichtung. Auch über einen Lichtleiter kann das Abbild der Temperaturverteilung durch einen ungeraden Kanal hin zur Temperaturmeßeinrichtung weitergeleitet werden.

In einer weiteren vorteilhaften Ausführungsform dieser Vorrichtung enthält die Temperaturmeßeinrichtung eine Thermokamera. Deren Vorteil besteht darin, daß sie die Untersuchung der Temperaturverteilung auf einfache und sehr schnelle Weise ermöglicht und zwar sowohl zu einem ausgewählten Zeitpunkt (Einzelbild) als auch deren Entwicklung während eines längeren Zeitraumes (Folge von Einzelbildern).

In einer spezielleren vorteilhaften Ausführungsform dieser Vorrichtung enthält diese zusätzlich eine Auswerteeinheit zur Kompensation von IR-Verlusten. Sowohl das Fenster als auch die meist vorhandene Klebeschicht besitzen keine 100-prozentige Durchlässigkeit für Wärmestrahlung. Dieser Verlustfaktor kann unabhängig von der thermographischen Untersuchung des Umformprozesses bestimmt werden und dann während der Untersuchung des Umformprozesses (oder auch danach) mittels der Auswerteeinheit rechnerisch kompensiert werden. Entsprechendes gilt für weitere meßbare und regelmäßig (nicht zufällig) auftretende Einflußparameter.

Die Aufgabe wird bezüglich des zu schaffenden Verfahrens zur thermographischen Untersuchung von Funktionsflächen an Umformwerkzeugen erfindungsgemäß dadurch gelöst,
- daß die Untersuchung mittels einer Temperaturmeßeinrichtung
   während eines umformenden Prozesses erfolgt,
   und
- daß vor der Untersuchung
   in das Umformwerkzeug im Bereich der Funktionsfläche
   mindestens ein Kanal eingebracht wird, und
   - der vorzugsweise
      mit einem für Wärmestrahlung durchlässigen Fenster abdeckt wird,
   - der zu der Temperaturmeßeinheit führt, und
- daß während der Untersuchung
   das Abbild der bei dem umformenden Prozeß in der Funktionsfläche
   sich einstellenden Wärmeverteilung durch das Fenster und den Kanal
   mittels Wärmestrahlung zu der Temperaturmeßeinheit geführt wird.

Die Vorteile des erfindungsgemäßen Verfahrens sind die gleichen, die bereits als Vorteile der erfindungsgemäßen Vorrichtung aufgezählt wurden.

In einer weiteren vorteilhaften Ausführungsform dieses Verfahrens wird vor der Untersuchung auf dem Fenster eine Beschichtung aufgebracht und dann wird der Kanal mit dem Fenster abgedeckt.

Hierdurch wird die Bestimmung des Einsatzverhaltens und insbesondere der Einsatzgrenzen von beliebigen Werkzeugbeschichtungen unter realen Anwendungsbedingungen ermöglicht. Vergleiche die entsprechende Diskussion der Vorrichtung.

In einer weiteren vorteilhaften Ausführungsform dieses Verfahrens wird über dem Fenster oder anstatt dem Fenster eine Abdeckung befestigt, bestehend aus einem üblicherweise bei Umformprozessen verwendeten Werkzeugwerkstoff.

Der Vorteil dieses Verfahrensschrittes besteht erstens darin, daß so beliebige Werkzeugmaterialien und der Werkzeugoberflächen untersucht werden können, und zweitens in seiner einfachen, schnellen und kostengünstigen Durchführbarkeit.

In einer weiteren vorteilhaften Ausführungsform dieses Verfahrens wird auf der Abdeckung eine Beschichtung aufgebracht.

Der Vorteil dieses Verfahrensschrittes besteht erstens darin, daß er unmittelbar vergleichende Messungen unterschiedlichster Beschichtungen mit einer Grundvorrichtung ermöglicht. Mittels vergleichender Messungen kann in Optimierungsschleifen iterativ eine optimal bedarfsangepaßte Beschichtung für jeden Anwendungsfall der Umformtechnik entwickelt werden.

In einer vorteilhaften Ausgestaltung dieses Verfahrens werden auf dem Weg von der Beschichtung bis zur Temperaturmeßeinheit auftretende Wärmeverluste rechnerisch kompensiert. Auf diesem Weg treten zwangsläufig IR-Strahlungsverluste auf. Dieser Verlustfaktor kann unabhängig von der thermographischen Untersuchung des Umformprozesses bestimmt werden und dann während der Untersuchung des Umformprozesses (oder auch danach) rechnerisch kompensiert werden.

Eine vorteilhafte Methode zur Bestimmung und Kompensation des Verlustfaktors besteht darin, daß thermographische Untersuchungen an IR-durchlässigen Schichten jeweils mit und ohne Wärmeverlust durchgeführt werden ([mit und ohne Fenster] oder [mit und ohne Abdeckung und Fenster] oder [mit und ohne Abdeckung ohne Fenster]), und daß anhand dieser Untersuchungsergebnisse eine Eichkurve berechnet wird, und daß anhand dieser Eichkurve bei der thermographischen Untersuchung von beliebigen, also IR-durchlässigen oder IR-undurchlässigen Schichten die Wärmeverluste ([mit Fenster und ohne Abdeckung] oder [mit Fenster und mit Abdeckung] oder [mit Abdeckung und ohne Fenster]) rechnerisch kompensiert werden.

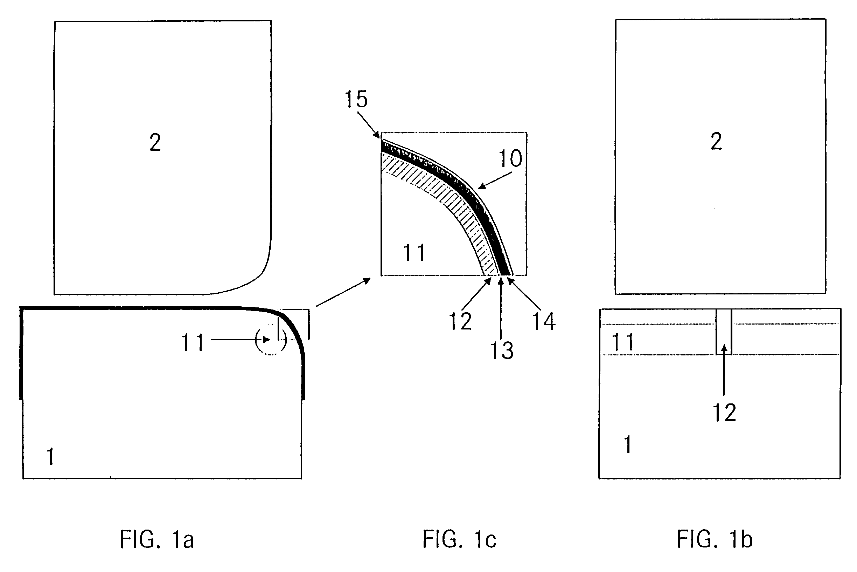

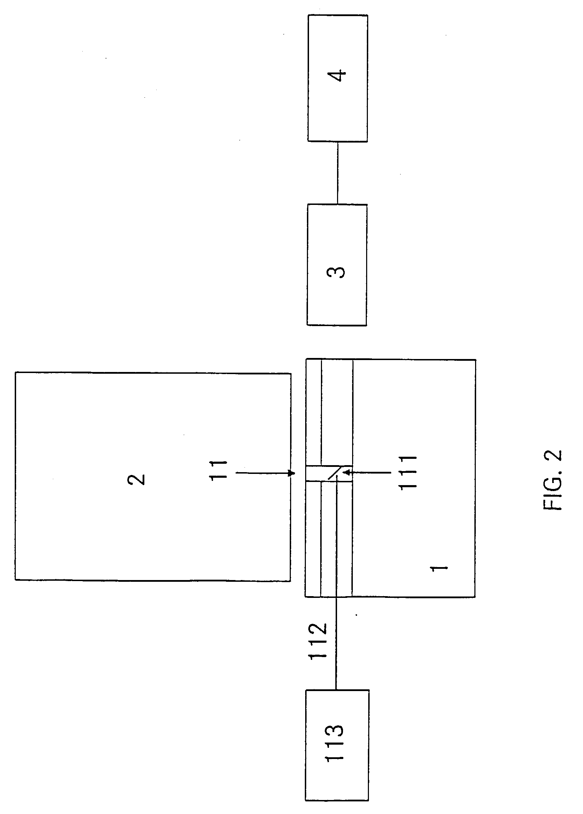

Nachfolgend werden anhand eines Ausführungsbeispiels und der Figuren 1 und 2 die erfindungsgemäße Vorrichtung und das erfindungsgemäße Verfahren näher erläutert. Dabei zeigen
- Figur 1: Eine bevorzugte Ausführungsform der erfindungsgemäßen Vorrichtung, hier speziell der sog. Streifenziehversuch, ein Standardversuch in der Umformtechnik
(1a: von der Seite; 1b: von vorne; 1c: Ausschnittvergrößerung aus 1a)
- Figur 2: Eine bevorzugte Ausführungsform der Strahlenführung
(Ein Schwenkspiegel leitet IR-Strahlen durch den Kanal
zur Temperaturmeßeinrichtung)

Die Figur 1 stellt schematisch und nicht maßstabsgerecht eine Vorrichtung zur thermographischen Untersuchung von Funktionsflächen an Umformwerkzeugen dar, bestehend aus einem Werkzeug 1 (hier die Ziehkante im Streifenziehversuch), das im Bereich der Funktionsfläche 10 einen durch das Werkzeug 1 hindurch verlaufenden Kanal 11 aufweist. Die werkstückseitige Öffnung des Kanals 11 ist mit einem Fenster 12 belegt. Das Fenster 12 ist in das Werkzeug 1 (hier: in die Ziehkante) so eingepaßt, daß es mit der Oberfläche der Ziehkante bündig abschließt und so eine glatte Auflage- und Stützfläche für die darüber befestigte metallische Abdeckung 14 bietet. Die Befestigung ist ausgeführt in Form einer Klebeschicht 13 zwischen Abdeckung 14 und Fenster 12 bzw. Oberseite des Werkzeugs 1. Auf der Abdeckung 14 ist eine zu untersuchende Beschichtung 15 aufgebracht. Über der Ziehkante ist ein Niederhalter 2 zu sehen.

Die Figur 2 zeigt in dem Kanal 11 einen IR-Schwenkspiegel 111, der die von der Funktionsfläche 10 ausgehende IR-Strahlung zu einer Temperaturmeßeinrichtung 3 führt, hier zu einer Thermokamera. An diese Temperaturmeßeinrichtung 3 ist eine Auswerteeinheit 4 angekoppelt - hier ein spezieller Meßrechner. Das Abbild der Temperaturverteilung von der Unterseite der Beschichtung 15 wird mittels Wärmeleitung durch die Abdeckung 14 zur Oberseite der Klebeschicht 13 geführt, von dort mittels Wärmestrahlung durch die Kleberschicht 13 und durch das Fenster 12 und dann durch den Kanal 11 (umgeleitet mittels des IR-Spiegels 111) bis zur Temperaturmeßeinrichtung 3. Das von der Temperaturmeßeinrichtung 3 (Thermokamera) aufgenommene Abbild der Temperaturverteilung von der Unterseite der Beschichtung 15 wird in der Auswerteeinheit 4 rechnerisch derart modifiziert, daß auf dem Weg von der Beschichtung 15 bis zur Temperaturmeßeinheit 3 auftretende Wärmeverluste kompensiert werden.

Der Schwenkspiegel 111 wird über einen Spiegelträger 112 von einer Schwenkvorrichtung 113 geschwenkt. Dies erlaubt das Abfahren/die Verschiebung des thermographischen Bildfeldes über die werkstückseitige Kanalöffnung und so auch die thermographische Untersuchung größerer Teile der Funktionsfläche 10.

In diesem Ausführungsbeispiel besteht die Abdeckung 14 aus dem chromhaltigen Werkzeugstahl 160 CrMoV 12 (Deutsche Stoffnummer: 1.2379), weist eine Dicke von 300 µm auf und überdeckt die gesamte Ziehkante. Vergleichende Umformversuche mit und ohne Abdeckung 14 ergeben eine Abweichung des Gradienten zwischen Maximalwert und Durchschnittswert der Temperaturverteilung von circa 10 Prozent.

Das Fenster 12 besteht aus CVD-Diamant und ist rechteckig mit einer Kantenlänge von 2 mm und einer Dicke von maximal 500 µm. Die Oberfläche des Fensters wird an die Geometrie des Werkzeugs angepaßt. In diesem Ausführungsbeispiel erfolgte die Anfertigung des Fensters mit einem Radius, der dem des Grundwerkzeugs entspricht.

Die Montage des Fensters in das Werkzeug erfolgt zweckmäßigerweise durch Einkleben in eine genau passende Vertiefung im Werkzeug, die z.B. durch Funkenerosion gefertigt werden kann. Das Fenster liegt in diesem Ausführungsbeispiel "wie ein Gullideckel" im Werkzeug.

Die Abdeckung 14 ist auf dem Fenster 12 und der Oberfläche des Werkzeugs 1 mittels einer Klebeschicht 13 aus handelsüblichem, IR-durchlässigem Zwei-Komponenten-Kleber befestigt. Versuche haben gezeigt, daß diese Befestigung kurzfristige Temperaturspitzen ( ≈ 1 Sekunde) bis circa 500 Grad Celsius und Dauerbelastungen ( ≈ 20 Sekunden) bis circa 200 Grad Celsius ohne kritische Beeinträchtigung der Haftung übersteht.

In diesem Ausführungsbeispiel wird eine typische Beschichtung 15 - Titan-Nitrid in einer Dicke von 5 µm - thermographisch in situ während der Umformung untersucht: Dazu wird sie mittels üblicher Abscheide-Methoden auf die Abdeckung 14 aufgebracht und dann wird die Abdeckung 14 mittels der Klebeschicht 13 auf dem Werkzeug 1 - einer Ziehkante - über dem Diamant-Fenster 12 befestigt. Danach wird das Werkzeug 1 eingesetzt, d.h. über die Ziekante wird ein Werkstück umgeformt. Infolgedessen bildet sich in der Beschichtung 15 eine charakteristische Temperaturverteilung aus, die Aussagen über die Belastung und den Verschleißzustand der Beschichtung 15 erlaubt. Das Abbild dieser Temperaturverteilung wird mittels Wärmeleitung durch die Abdeckung 14 und mittels Wärmestrahlung durch die Kleberschicht 13, das Diamant-Fenster 12 über den Spiegel 111 zu der Thermokamera 3 geführt. Das von der Thermokamera 3 aufgenommene Abbild der Temperaturverteilung wird zu der Auswerteeinheit 4 in Form eines Meßrechners weitergeleitet, dort werden Wärmeverluste, die auf dem Weg von der Beschichtung 15 bis zu der Thermokamera 3 auftreten, rechnerisch kompensiert und weitere Auswertungen vorgenommen.

Die erfindungsgemäße Vorrichtung und das erfindungsgemäße Verfahren erweisen sich in den Ausführungsformen des vorstehend beschriebenen Beispiels als besonders geeignet für die schnelle und einfache thermograpische Untersuchung beliebiger Beschichtungen für umformende Werkzeuge unter der Zielsetzung der Optimierung des Verschleiß- und des Umformverhaltens der eingesetzten Werkzeuge.

Die Erfindung ist nicht nur auf das zuvor geschilderte Ausführungsbeispiel beschränkt, sondern vielmehr auf weitere übertragbar.

So ist zum Beispiel denkbar, die Vorrichtung und das Verfahren nicht nur zur Auswahl einer optimalen Beschichtung für einen bestimmten Umformprozeß für beliebige Werkstückstoffe einzusetzen, sondern auch den Umformprozeß selbst für eine gegebene Beschichtung zu optimieren hinsichtlich den sich durch die Werkzeuggeometrie und die Maschineneinstellungen ergebenden technologisch physikalischen Beanspruchungsparametern oder hinsichtlich ggf. eingesetzter Schmierstoffe. Eine solche Prozeßoptimierung könnte zumindest von den Maschineneinstellungen her mittels einer geeigneten Auswerteeinheit mit genügend hoher Rechenleistung, kontinuierlich in Echtzeit während des Umformprozesses ablaufen.

Gerade bei der Entwicklung neuer Methoden/Mittel der Bearbeitung ohne den Einsatz eines Schmierstoffes, dessen Einsatz mit hohen Kosten und Folgekosten verbunden ist, stellt die Temperatur eine kritische Größe dar. Durch den Einsatz dieser neuen Meßtechnik kann die Temperaturentwicklung nicht nur absolut, sondern auch räumlich und zeitlich aufgelöst unmittelbar erfaßt (und dargestellt) werden und steht für Optimierungsschleifen des Umformprozesses zur Verfügung.

Außerdem ist es vorstellbar auf den Schwenkspiegel zu verzichten und die Wärmestrahlung einfach durch den luftgefüllten Kanal zu leiten. Sollte der Kanal aus bautechnischen Gründen Krümmungen aufweisen, die einen geradlinigen Strahlengang behindern, so kann dem mittels Lichtleitern abgeholfen werden, welche die Wärmestrahlung in den Krümmungen umlenken.

Die Abdeckung muß auch nicht auf dem Werkzeug aufgeklebt werden. Vorstellbar ist auch ein einfaches Auflegen, Festklemmen oder Schrauben, je nach dem, welche bautechnischen Vorgaben zu beachten und mechanische Belastungen zu erwarten sind.

Genauso kann die Erfindung auch ohne Beschichtung der Abdeckung oder auch ohne Fenster über dem Kanal eingesetzt werden.

Des weiteren wird betont, daß die Erfindung außer für den gemäß Ausführungsbeispiel beschriebenen Ziehkante auch für ein beliebiges anderes umformendes Werkzeug anwendbar ist.

Außerdem kann der Kanal, durch den die thermograpische Untersuchung erfolgen soll, nicht nur - wie in dem Ausführungsbeispiel gezeigt - in der Ziehkante angeordnet sein, sondern im Bereich jeder Funktionsfläche eines beliebigen Werkzeuges. Das bedeutet für das Ausführungsbeispiel des Streifenziehversuchs, daß ein Kanal im Bereich der Funktionsflächen der Ziehkante und/oder des Niederhalters und/oder einer evtl. vorhanden Matrize angeordnet sein kann.

### Literatur

[1] EP 685 297 A1

## Patentansprüche

1. Vorrichtung zur thermographischen Untersuchung von Funktionsflächen (10) an Umformwerkzeugen (1),
die eine Temperaturmeßeinrichtung (3) enthält,
**dadurch gekennzeichnet**,
- daß das Umformwerkzeug (1) im Bereich der Funktionsfläche (10)
mindestens einen Kanal (11) aufweist,
- die jeder eine werkstückseitige Öffnung aufweisen,
und
- in denen eine von der zu untersuchenden Funktionsfläche (10)
ausgehende Wärmestrahlung weiterleitbar ist,
- wobei die durch einen Kanal (11) weitergeleitete
Wärmestrahlung zumindest mittelbar von der
Temperaturmeßeinrichtung (3) erfaßbar ist,
- daß die werkstückseitige Öffnung jedes Kanals (11)
mit einem Fenster (12) belegbar ist,
welches für die Wärmestrahlung durchlässig ist.

2. Vorrichtung nach Anspruch 1,
**dadurch gekennzeichnet**,
- daß die werkstückseitige Öffnung jedes Kanals (11)
mit einem Fenster (12) belegt ist,
- daß auf jedem Fenster (12) eine Beschichtung (15)
aufgebracht ist.

3. Vorrichtung nach Anspruch 1,
**dadurch gekennzeichnet**,
- daß
- über dem Fenster (12) oder
- anstatt dem Fenster (12)
eine Abdeckung (14) befestigt ist,
- bestehend aus einem üblicherweise bei Umformprozessen verwendeten Werkzeugwerkstoff.

4. Vorrichtung nach Anspruch 3,
**dadurch gekennzeichnet**,
- daß auf der Abdeckung (14) eine Beschichtung (15)
aufgebracht ist.

5. Vorrichtung nach einem der Ansprüche 3 oder 4,
**dadurch gekennzeichnet**,
- daß das Material und die Dicke der Abdeckung (14) derart gewählt sind,
daß das Abbild der Temperaturverteilung der Funktionsfläche (10),
welches mittels Wärmeleitung durch die Abdeckung (14) hindurchgeführt wird,
in Querrichtung zu dieser beabsichtigten Abbildungsrichtung nicht über einen definierten Grenzwert hinaus verfälscht wird,
- vorzugsweise daß das Material, aus dem die Abdeckung (14) besteht,
ein chromhaltiger Werkzeugstahl ist und/oder
- vorzugsweise daß die Dicke der Abdeckung (14) nicht mehr als 300 µm beträgt.

6. Vorrichtung nach einem der vorhergehenden Ansprüche 3 bis 5
**dadurch gekennzeichnet**,
- daß die Abdeckung (14) durch Aufkleben befestigt ist,
- vorzugsweise mit einer Klebeschicht (13) aus Zwei-Komponenten-Kleber,
- die für die Wärmestrahlung durchlässig ist, und
- die kurzfristige Temperaturspitzen von bis zu 500 Grad Celsius
und Dauertemperaturen von bis zu 200 Grad Celsius
ohne wesentliche Beeinträchtigung der Haftung übersteht.

7. Vorrichtung nach einem der vorhergehenden Ansprüche 3 bis 6,
**dadurch gekennzeichnet**,
- daß das Fenster (12) aus einem Material aufgebaut ist,
welches eine ähnliche Wärmeleitfähigkeit besitzt wie die Abdeckung (14),
- vorzugsweise aus Diamant- oder Germanium aufgebaut ist.

8. Vorrichtung nach einem der vorhergehenden Ansprüche,
**dadurch gekennzeichnet**,
- daß in dem Kanal (11) mindestens ein IR-Spiegel angeordnet ist,
zur Weiterleitung der werkstückseitig in den Kanal (11) eintretenden Wärmestrahlung in Richtung auf die Temperaturmeßeinrichtung (3).

9. Vorrichtung nach einem der Ansprüche 1 bis 7,
**dadurch gekennzeichnet**,
- daß in dem Kanal (11) ein Lichtleiter (111) angeordnet ist,
zur Weiterleitung der werkstückseitig in den Kanal (11) eintretenden Wärmestrahlung in Richtung auf die Temperaturmeßeinrichtung (3).

10. Vorrichtung nach einem der vorhergehenden Ansprüche,
**dadurch gekennzeichnet**,
- daß die Temperaturmeßeinrichtung (3) eine Thermokamera enthält, und
- vorzugsweise die Vorrichtung zusätzlich eine Auswerteeinheit (4) enthält zur Kompensation von IR-Verlusten.

11. Verfahren zur thermographischen Untersuchung von Funktionsflächen (10) an Umformwerkzeugen (1),
- wobei die Untersuchung mittels einer Temperaturmeßeinrichtung (3)
während eines umformenden Prozesses erfolgt,
**dadurch gekennzeichnet**,
- daß vor der Untersuchung
in das Umformwerkzeug (1) im Bereich der Funktionsfläche (10) mindestens ein Kanal (11) eingebracht wird,
- der vorzugsweise
mit einem für Wärmestrahlung durchlässigen Fenster (12) abdeckt wird,
- der zu der Temperaturmeßeinheit (3) führt, und
- daß während der Untersuchung
das Abbild der bei dem umformenden Prozeß in der Funktionsfläche (10)
sich einstellenden Wärmeverteilung durch das Fenster (12) und den Kanal (11)
mittels Wärmestrahlung zu der Temperaturmeßeinheit (3) geführt wird.

12. Verfahren nach Anspruch 11,
**dadurch gekennzeichnet**,
- daß jeder Kanal mit einem für Wärmestrahlung durchlässigen Fenster (12) abdeckt wird,
- daß vor der Untersuchung auf dem Fenster (12) eine Beschichtung (15) aufgebracht wird.

13. Verfahren nach Anspruch 11,
**dadurch gekennzeichnet**,
- daß
- über dem Fenster (12) oder
- anstatt dem Fenster (12)
eine Abdeckung (14) befestigt wird,
- bestehend aus einem üblicherweise bei Umformprozessen verwendeten Werkzeugwerkstoff.

14. Verfahren nach Anspruch 13,
**dadurch gekennzeichnet**,
- daß auf der Abdeckung (14) eine Beschichtung (15)
aufgebracht wird.

15. Verfahren nach einem der Ansprüche 11 bis 14,
**dadurch gekennzeichnet**,
- daß auf dem Weg von der Funktionsfläche (10) bis zur Temperaturmeßeinheit (3) auftretende Wärmeverluste rechnerisch kompensiert werden,
vorzugsweise derart,
- daß thermographische Untersuchungen an IR-durchlässigen Schichten jeweils
- mit und ohne Fenster (12) oder
- mit und ohne Abdeckung (14) und Fenster (12) oder
- mit und ohne Abdeckung (14) ohne Fenster (12)
durchgeführt werden,
- daß anhand dieser Untersuchungsergebnisse eine Eichkurve berechnet wird,
- daß anhand dieser Eichkurve die Wärmeverluste bei der thermographischen Untersuchung
- mit Fenster (12) und ohne Abdeckung (14) oder
- mit Fenster (12) und mit Abdeckung (14) oder
- mit Abdeckung (14) und ohne Fenster (12)
kompensiert werden.
